Europäisches Patentamt

European Patent Office

Office européen des brevets

(19)

(11) Numéro de publication: **0 466 615 B1**

## (12) FASCICULE DE BREVET EUROPEEN

(45) Date de publication de fascicule du brevet: **12.10.94**    (51) Int. Cl.⁵: **D21C 5/02**

(21) Numéro de dépôt: **91420220.5**

(22) Date de dépôt: **04.07.91**

(54) **Procédé pour désencrer les papiers imprimés.**

(30) Priorité: **12.07.90 FR 9009128**

(43) Date de publication de la demande:
**15.01.92 Bulletin 92/03**

(45) Mention de la délivrance du brevet:
**12.10.94 Bulletin 94/41**

(84) Etats contractants désignés:
**AT BE CH DE ES FR GB IT LI NL SE**

(56) Documents cités:
**EP-A- 0 116 145**
**EP-A- 0 133 559**

**TAPPI JOURNAL. vol. 69, no. 3, mars 1986, ATLANTA US pages 102 - 106; T.H.OUICKet al.: "Xerography deinking - a fundamental approach."**

**ABSTRACT BULLETIN OF THE INSTITUTE OF PAPER CHEMISTRY. vol. 58, no. 3,septembre 1987, APPLETON US page 372 L. MARCHILDON et al.: "Laboratory deinking of newsprint by the flotation technique**

(73) Titulaire: **CENTRE TECHNIOUE DE L'INDUSTRIE DES PAPIERS CARTONS ET CELLULOSE .**
**Domaine Universitaire**
**F-38000 Grenoble (FR)**

(72) Inventeur: **Galland, Gérard**
**3 rue des Trois Epis**
**F-38100 Grenoble (FR)**

(74) Mandataire: **Laurent, Michel et al**
**Cabinet LAURENT et CHARRAS,**
**20, rue Louis Chirpaz**
**B.P. 32**
**F-69131 Ecully Cédex (FR)**

Rank Xerox (UK) Business Services
(3.10/3.09/3.3.3)

## Description

L'invention concerne un procédé de recyclage de vieux papiers imprimés, quel que soit leur procédé d'impression et la nature de l'encre utilisée, non soumis préalablement à un tri quelconque.

Le recyclage des vieux papiers imprimés correspond à une réalité industrielle en plein développement, et devient de fait une technique assez largement répandue, qu'il n'est donc pas utile de décrire en détail. Sommairement, le recyclage consiste à effectuer deux opérations essentielles, à savoir une première opération de désencrage, et une seconde opération de blanchiment.

La première opération dite "de désencrage" est une étape indispensable aujourd'hui également bien connue. La seconde opération dite "de blanchiment" ne devient nécessaire que lorsque l'on souhaite obtenir des pâtes recyclées d'une qualité élevée, c'est-à-dire d'un haut niveau de blancheur.

L'opération de désencrage fait appel à deux phases principales :

- le décrochage de l'encre du support fibreux, effectué dans un pulpeur simultanément à la mise en suspension des vieux papiers, avec généralement l'adjonction d'un ou plusieurs réactifs chimiques ;
- puis, l'élimination de cette encre après son décrochage de cette suspension pâteuse réalisée par exemple par flottation ou par lavage.

En effet, de manière traditionnelle, le décrochage de l'encre du support fibreux est effectué en milieu alcalin. La soude, généralement utilisée, a un double effet favorable. D'une part, elle provoque le gonflement de la fibre de cellulose, et d'autre part, elle attaque les liants des encres sur le support fibreux.

Depuis quelques années, on observe un développement sans cesse croissant de journaux imprimés selon le procédé flexographique, notamment par suite des nombreux avantages qu'il offre par rapport aux procédés d'impression traditionnels.

Néanmoins, les papiers imprimés selon le procédé flexographique, présentent l'inconvénient majeur d'être difficilement désencrables, et donc difficilement recyclables par les procédés de désencrage traditionnels. En effet, le liant des encres flexographiques est constitué de résines acryliques acides, saponifiées par une amine. Si l'on traite les papiers ainsi imprimés par un milieu alcalin, le liant se dissout, provoquant pratiquement l'isolation du pigment. Ce dernier étant très fin, et, en outre, ne présentant pas de caractère hydrophobe, il ne flotte pas et il offre une surface spécifique plus importante, absorbant mieux de fait la lumière incidente, et donc altérant la blancheur résiduelle de la pâte.

Dans les procédés de désencrage traditionnels, après le décrochage de l'encre, celle-ci est éliminée par l'un des deux procédés suivants, à savoir flottation ou lavage. Toutefois, il est à noter que le niveau de contamination croissant des papiers recyclés conduit à proposer des chaines de traitement de plus en plus complexes, comportant plusieurs stades d'élimination de l'encre avec une dispersion mécanique de la matière entre les deux stades de flottation. On a par exemple proposé d'effectuer ces deux phases de flottation à des pH différents, à savoir respectivement une première phase en milieu alcalin, puis une seconde phase en milieu à pH plus faible, c'est à dire moins alcalin ou neutre (voir par exemple les communications présentées au Symposium EUCEPA à LJUBLJANA (Octobre 1989), d'une part par LINCK, MATZKE et SIEWERT, et d'autre part par ORTNER et FISHER). On a également proposé d'effectuer un lavage après la flottation et le blanchiment (voir par exemple document EP-A-0 284 526), ces deux stades de traitement de flottation et lavage étant effectués en milieu alcalin.

Lors de la conférence PIRA du 28 Février au 2 Mars 1989, PUTZ, TOEROEK et SCHAFFRATH, ont montré que dans le cas de journaux imprimés en flexographie avec des encres à l'eau, la réduction de la quantité d'hydroxyde de sodium introduite, donc une diminution du pH, permettait d'améliorer la blancheur. Néanmoins, les résultats obtenus ne sont pas satisfaisants, et ne sont pas comparables au procédé de désencrage traditionnel appliqué aux papiers imprimés par le procédé offset ou héliogravure.

Lors du symphosium sur le désencrage organisé par le PTS à Munich en Avril 1990, diverses communications, et notamment celles de PUTZ, TOEROEK, GOETTSCHING, de HORNFECK, LIPHARD , et de JAERREHULT, LUNDKVIST, HANECKER, PHAM TRI, ont présenté le résultats de travaux axés principalement sur l'utilisation de nouveaux additifs, destinés à mieux floculer et collecter les encres des impressions flexographiques. Ces résultats montrent certes des améliorations significatives de la blancheur finale, mais qui restent néanmoins limitées dès lors que l'on désire traiter des mélanges d'impression offset et flexographique.

Dans le document EP-A-0 116 145, on a décrit un procédé de désencrage des vieux papiers en effectuant l'élimination de l'encre en deux phases distinctes et séparées, avec une étape d'épaississage intermédiaire, ces deux phases étant effectuées en milieu alcalin (pH de 9 et plus) . Ce procédé qui donne de bons résultats avec des papiers imprimés en héliogravure ou en offset, n'est pas utilisable sur des papiers imprimés par flexographie, car, comme déjà dit ci-dessus, on libère les fines particules pigmentaires, ce qui perturbe l'étape de flottation et altère la blancheur de la pâte obtenue.

L'invention vise à pallier ces inconvénients. Elle propose un procédé de désencrage de papiers imprimés en vue de leur recyclage, et ce, quel que soit leur procédé d'impression, à savoir : offset, héliogravure, flexographie, typographie, etc., sans tri préalable entre les différentes catégories de procédés d'impression. En d'autres termes, le procédé objet de l'invention, vise à traiter des papiers imprimés mélangés, quelle que soit leur provenance.

Ce procédé pour désencrer les vieux papiers imprimés, dans lequel :

. on transforme lesdits papiers en une suspension pâteuse ;

. puis, on élimine l'encre de cette suspension, en deux phases distinctes et successives I et II, suivies d'une étape d'épaississage ;

. enfin, on envoie la pâte ainsi désencrée dans le circuit d'utilisation de la pâte,

se caractérise :

- en ce que, dans la première phase I au cours de laquelle on effectue une désintégration des vieux papiers en une suspension pâteuse puis une première élimination de l'encre et un épaississage de la pâte partiellement désencrée, on opère en milieu neutre ou acide ;

- et en ce qu'au cours de la seconde phase II, dans laquelle on récupère la pâte ainsi épaissie, on rajoute des réactifs, et enfin on pratique une seconde élimination de l'encre et un nouvel épaississage, on opère en milieu alcalin.

En d'autres termes, l'invention vise un perfectionnement dans un procédé de désencrage en deux phases successives qui consiste à effectuer ce traitement, respectivement tout d'abord en milieu neutre ou acide, puis en milieu alcalin.

On s'est aperçu de manière tout à fait inattendue, que le premier désencrage, effectué en milieu neutre ou légèrement acide, favorisait le second stade de désencrage effectué de manière traditionnelle en milieu alcalin.

Par "milieu neutre", on désigne une suspension fibreuse de vieux papiers désintégrés dont le pH n'a pas été modifié par addition volontaire d'agents chimiques pour lui donner un caractère alcalin. Selon les origines des papiers utilisés, le pH de cette suspension peut être au voisinage de 7, et même légèrement supérieur à 7 (par exemple 7,7 lorsque les charges et les liants confèrent à la suspension un caractère très légèrement alcalin).

De préférence, il faut opérer à un pH inférieur à huit (8) et en tous cas supérieur à quatre (4) pour ne pas dégrader les fibres.

La manière dont l'invention peut être réalisée et les avantages qui en découlent ressortiront mieux des exemples de réalisation qui suivent, à l'appui des deux figures annexées.

La figure 1 est une représentation schématique de l'une des formes de mise en oeuvre du procédé conforme à l'invention.

La figure 2 est une représentation schématique d'une autre forme de mise en oeuvre du procédé conforme à l'invention.

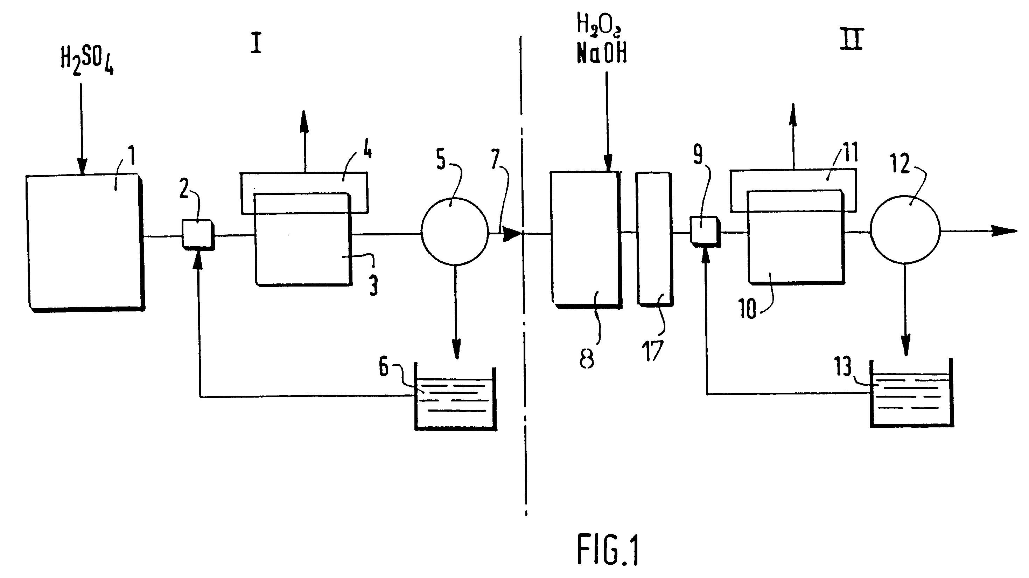

Comme on l'a schématisé sur la figure 1, le procédé conforme à l'invention consiste à éliminer l'encre de vieux papiers imprimés en deux phases I et II, respectivement neutre ou légèrement acide I, puis alcalin II.

Lors de la première phase I, on transforme tout d'abord les vieux papiers imprimés en une suspension aqueuse par désintégration dans un pulpeur (1), et ce en milieu acide à une température comprise entre 20 et 60 °C. Le milieu acide est obtenu par exemple par adjonction d'acide sulfurique $H_2SO_4$ ou par barbotage de dioxyde de carbone dans la solution. Avantageusement, on ajoute dans le pulpeur des agents tensio-actifs et/ou des agents anti-redéposition, tels que des carboxyméthyl celluloses, et ce de manière connue, dans le but de favoriser le décrochage de l'encre et la flottation ultérieure.

Dans une variante, toujours dans cette première phase, on peut rajouter un agent de blanchiment réducteur, actif en milieu acide, du type hydrosulfite de sodium, et stocker le mélange réactionnel ainsi constitué pendant une durée variable d'une demi-heure à une heure, en vue de permettre une action efficace de ces différents agents.

Simultanément, on peut également ajouter à la solution contenue dans le pulpeur (1) des agents complexants des ions de métaux lourds, du type DTPA (Acide Diethylène Triamino Pentacétique ou son sel de sodium) ou des dérivés d'acide phosphonique, dans le but de complexer les ions métalliques, susceptibles de favoriser l'action de l'agent de blanchiment réducteur, et l'action ultérieure d'un agent de blanchiment éventuellement incorporé lors de la seconde phase II en milieu alcalin.

Typiquement, le pH de la solution de la première phase I se situe entre 4,5 et 8.

Ce décrochage de l'encre est alors suivi d'une dilution (2) puis d'une élimination (3) de l'encre par flottation sélective, l'encre séparée étant concentrée sous forme de mousse (4).

EP 0 466 615 B1

La pâte ainsi partiellement désencrée est épaissie en (5), l'eau (6) résultant de cet épaississage étant recyclée et réintroduite dans le circuit au niveau de la dilution (2).

Cette première phase I a pour but essentiel de décrocher et d'éliminer l'encre des papiers imprimés avec des encres à l'eau.

En revanche, la seconde phase II qui va être décrite ci-après, concerne l'élimination totale de l'encre de l'ensemble des papiers à recycler, et plus spécifiquement l'élimination de l'encre des papiers imprimés selon des procédés plus traditionnels, offset, héliogravure, typographie.

Comme déjà dit, le premier désencrage en milieu acide favorise le second désencrage en milieu alcalin des papiers imprimés selon les procédés ci-dessus.En d'autres termes, la première phase I neutre, voire légèrement acide, interéagit avec la seconde phase II alcaline, pour permettre l'élimination simultanée des particules d'encre flexographique et des particules d'encre conventionnelle (offset, typographique, héliogravure), ce que l'on ne savait faire jusqu'alors.

La pâte partiellement désencrée (7) obtenue après épaississage en (5), à une concentration d'environ 15 %, ledit épaississage étant réalisé par exemple par filtration, est traitée dans un mélangeur (8) dans lequel on introduit des réactifs alcalins, typiquement de la soude, complétée avec du péroxyde d'hydrogène $H_2O_2$, comme agent de blanchiment, et ce de 1 à 2 % en poids de pâte sèche, et additionnée de manière traditionnelle de silicate de sodium, de 2 à 3% en poids de pâte sèche, et d'un agent complexant (DTPA). Si ce nouveau traitement peut être effectué à température ambiante, on a toutefois constaté qu'en élevant la température au voisinage de 55 à 60°C, l'efficacité était renforcée. En outre, afin de favoriser l'action de l'agent de blanchiment, le mélange réactionnel est stocké pendant environ une heure dans une tour de stockage (17). Ce stockage peut néanmoins varier de une demi-heure à trois heures. Ce traitement en milieu alcalin provoque le décrochage de l'encre des papiers imprimés selon le procédé offset, héliogravure, typographie. On ajoute alors des agents collecteurs, du type acides gras, savons d'acides gras ou produits dérivés, couramment utilisés pour le désencrage, et destinés à accentuer le caractère hydrophobe de l'encre ainsi décrochée, et à favoriser son élimination ultérieure par flottation.

Une fois cette opération réalisée, la pâte subit (9) une dilution, puis une nouvelle flottation sélective (10) au cours de laquelle les encres résiduelles décrochées en (8) sont éliminées sous forme de mousse (11).

Dans une variante, l'encre décrochée lors de la seconde étape (8) peut être éliminée par lavage et les eaux issues de ce lavage sont recyclées après flottation, tel que décrit dans le document EP-A-0 284 526.

La pâte ainsi désencrée subit un nouvel épaississage (12) avant d'être introduite dans le circuit d'utilisation de la pâte. Les eaux blanches (13) issues de cet épaississage, sont de manière classique recyclées et utilisées lors de la dilution (9).

Les pâtes issues de l'épaississage (12) peuvent éventuellement subir un blanchiment additionnel avant leur introduction dans le circuit d'utilisation de la pâte.

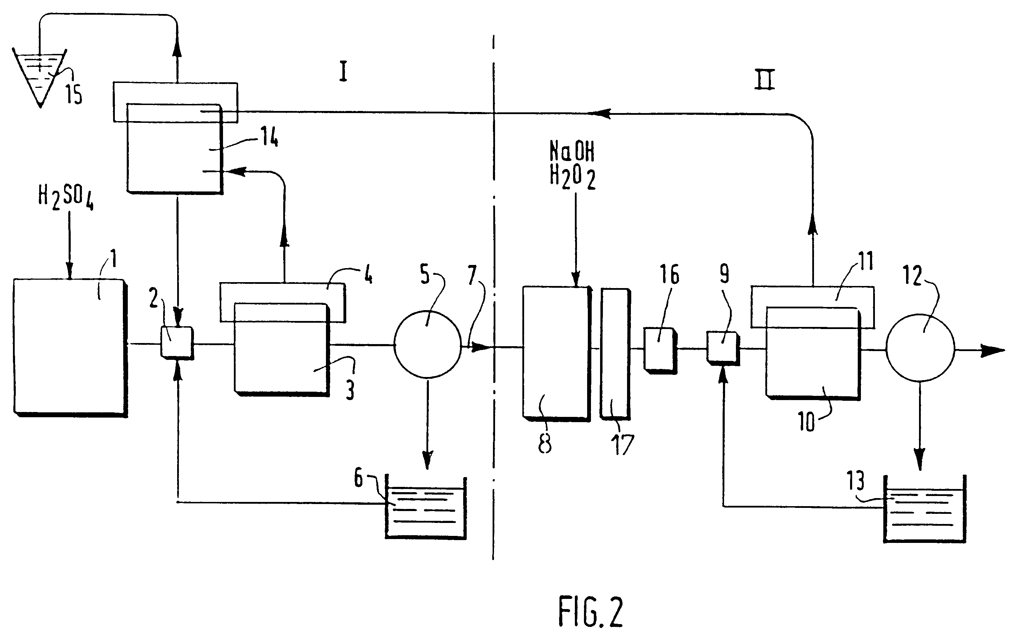

Dans une autre forme de réalisation avantageuse schématisée dans la figure 2, les mousses (4) et (11) issues de la flottation sélective de la pâte, sont traitées. Les mousses (11) subissent une acidification préalable afin de les amener au même pH que les mousses (4). Elles sont ensuite mélangées, puis subissent une nouvelle flottation sélective (14), les mousses issues de cette nouvelle flottation étant définitivement rejetées (15) et la matière ainsi récupérée étant recyclée au niveau de la dilution (2) de la phase I de désencrage.

La phase II peut également être complétée d'un traitement mécanique (16) à l'issue du stockage dans la tour (17), destiné à favoriser le décrochage de l'encre des papiers imprimés selon le procédé offset, et ce à une concentration ne dépassant pas de préférence 20 %.

En outre, l'installation peut être complétée d'une ligne de désintégration et décrochage traditionnels en milieu alcalin, montée en parallèle avec la ligne de traitement décrite, destinée à traiter les papiers imprimés selon les procédés offset, héliogravure, typographie, et ne contenant pas de papiers imprimés avec des encres à l'eau. Ainsi, l'introduction de ces papiers peut s'effectuer directement soit en sortie du mélangeur (8), et subir le traitement décrit dans la phase II, soit après dilution (9) et avant flottation (10).

Les exemples ci-après illustrent les résultats obtenus d'une part par les procédés traditionnels, et d'autre part par le procédé conforme à l'invention.

## Exemple 1

De manière connue, on traite un mélange de vieux papiers imprimés selon les procédés d'impression offset, héliogravure et flexographique. Ces papiers sont transformés en une suspension pâteuse de concentration 15% au moyen d'un pulpeur traditionnel en milieu alcalin, contenant typiquement en poids de matière sèche 1 % de soude, 2 % de silicate de sodium, 1 % de peroxyde d'hydrogène et 0,8 % de savon.

4

La température du mélange est maintenue à 45 °C.

La suspension pâteuse alcaline est alors diluée, puis est soumise à une flottation sélective. On constate que selon le type de papiers utilisés, on obtient des blancheurs (mesurées selon la norme AFNOR Q03-039), respectivement de :

- 58 pour du journal offset,
- 62 pour un mélange de journal offset/magazine,
- 28 pour des journaux flexographiques et,
- 40 pour un mélange de journaux à moitié flexo et moitié offset.

**Exemple 2**

On dispose d'un mélange de journaux provenant à 50% d'impression offset et 50 % d'impression flexographique (avec encres à l'eau).

On transforme ce mélange en une suspension pâteuse à pH 5 dans un pulpeur en milieu acidifié par de l'acide sulfurique. On introduit alors un agent tensio-actif du type BEROCELL 213 (marque déposée de EKA). La température du traitement est de 45 °C. On dilue alors le mélange ainsi constitué, et on soumet ce mélange dilué à une flottation en milieu acide (pH = 5). La blancheur obtenue est de 45.

**Exemple 3**

On répète l'exemple 2 avec un traitement acide à pH compris entre 5 et 6. On épaissit la pâte à une concentration de 18%, puis on introduit une liqueur contenant de la soude (1%), du silicate de sodium (2,5%), un agent complexant (DTPA) (0,3%) et du peroxyde d'hydrogène (1%). Les quantités données correspondent à des pourcentages en poids de pâte sèche. On obtient une blancheur de 50.

Après dilution, on ajoute 1% en poids de matière sèche de savon, puis on effectue une seconde flottation sélective en milieu alcalin (pH voisin de 9), selon le procédé conforme à l'invention. La blancheur finale obtenue est de 57.

Cet exemple conforme à l'invention illustre le progrès surprenant et inattendu, notamment dans l'amélioration de la blancheur qui passe de 45 à 57.

**Exemple 4**

On répète l'exemple 3, mais en effectuant la désintégration et la première flottation à un pH neutre, c'est à dire, sans adjonction de produit quelconque, susceptible d'acidifier la solution traitée . La blancheur obtenue après flottation est de 42 et après blanchiment de 49.

On effectue la même deuxième flottation en milieu alcalin. On obtient une blancheur de 55.

**Exemple 5**

On reprend l'exemple 3, mais après blanchiment au peroxyde, on dilue la pâte à 5 % environ et on la traite cinq minutes dans un désintégrateur de laboratoire.

On effectue la seconde flottation comme décrit dans l'exemple 3 ; la blancheur finale de la pâte est de 62.

**Exemple 6**

On reprend l'exemple 5 dans lequel on introduit dans le mélange, lors du décrochage dans le pulpeur au cours de la phase I, de l'hydrosulfite de sodium ($Na_2S_2O_4$) à raison de 1,5 % en poids de matière sèche. On laisse reposer le mélange pendant une demi-heure. La blancheur obtenue après la flottation en milieu acide est de 47. La blancheur finale après flottation en milieu alacalin est de 63.

**Exemple 7**

On reprend l'exemple 5, mais seulement en utilisant des journaux imprimés selon le procédé offset. On observe une blancheur finale de 64, matérialisant ainsi de manière significative l'amélioration inhérente au traitement en milieu acide.

**Exemple 8 :**

On répète l'exemple 3, en remplaçant le traitement acide de la première phase par un traitement alcalin à pH voisin de 9,5 en utilisant des mêmes produits qu'à l'exemple 1.

On effectue la seconde phase à un pH voisin de 9.

Cette forme d'exécution correspond à celle décrite dans le document EP-A-0 116 145.

On obtient une blancheur de 40 après la première flottation, 51 après l'épaississage consécutif à cette flottation, puis 57 après la seconde flottation. On constate donc que si certes la blancheur finale est équivalente à celle obtenue à l'exemple 3, en revanche, la plus grande partie de l'encre flexographique est éliminée lors de la phase d'épaississage. Il s'ensuit qu'en exploitation industrielle, on enrichit en fines particules d'encre la boucle de la première phase que l'on recycle avec les eaux d'épaississage. En d'autres termes, on pollue la suspension à traiter, entrainant une dégradation du procédé, et par voie de conséquence de la qualité de la pâte.

**Exemple 9**

On reprend l'exemple 5, les journaux utilisés étant imprimés exclusivement selon le procédé flexographique au moyen d'encres à l'eau. La blancheur finale obtenue est de 55.

On a rassemblé dans le tableau ci-après les valeurs de blancheur obtenues pour différents échantillons de journaux en fonction de leur procédé d'impression, selon les exemples précédents.

|  | Offset | flexo. | flexo/offs |
|---|---|---|---|
| ART ANTERIEUR |  |  |  |
| Exemple 1 traitement en phase alcaline | 58 | 28 | 40 |
| Exemple 2 traitement en phase acide (pH 5) |  |  | 45 |
| Exemple 8 phase I : pH 9,5 phase II: pH 9 |  |  | 57* |
| INVENTION |  |  |  |
| Exemple 3 phase I : 5 < pH < 6 phase II : pH 9 | 60 | 55 | 57 |
| Exemple 4 phase I : pH neutre phase II : pH 9 | 62 | 54 | 55 |
| Exemples 5, 7 et 9 phase I : 5 < pH < 6 + désintégrateur phase II : pH 9 | 64 | 55 | 62 |
| Exemple 6 phase I : 5 < pH < 6 + $Na_2S_2O_4$ phase II : pH 9 | 65 | 57 | 63 |

(*) mais la plus grande partie de l'encre flexographique est éliminée par épaississage, et son recyclage entraine une dégradation du procédé de traitement.

On observe donc que le procédé décrit dans l'invention offre de nombreux avantages par rapport aux procédé de désencrage connus à ce jour. Tout d'abord, on peut noter qu'il permet de désencrer séparément et indifféremment des papiers, quel que soit leur procédé d'impression, notamment des papiers imprimés selon le procédé flexographique (encres à l'eau), et ce avec de bonnes qualités de blancheur. En outre, on constate qu'il est tout à fait possible de désencrer des mélanges de papiers, ce que l'on ne savait faire efficacement à ce jour. Enfin, le procédé conforme à l'invention favorise, et ce de manière inattendue, le désencrage des papiers imprimés selon des procédés traditionnels, et notamment selon le procédé offset. Ainsi, le procédé selon l'invention peut donc être avantageusement utilisé pour le traitement de recyclage de vieux papiers imprimés d'origines les plus variées, préalablement triés ou non.

**Revendications**

1. Procédé pour désencrer les vieux papiers imprimés, dans lequel :
   . on transforme lesdits papiers en une suspension pâteuse ;

. puis, on élimine l'encre de cette suspension en deux phases I et II distinctes et successives, suivies chacune d'une étape d'épaississage ;

. enfin, on envoie la pâte ainsi désencrée dans le circuit d'utilisation de la pâte,

**caractérisé :**

- en ce que la première phase I, au cours de laquelle on effectue une désintégration (1) des vieux papiers en une suspension pâteuse, puis une première élimination de l'encre (3) et un épaississage (5) de la pâte partiellement désencrée, est effectuée en milieu neutre ou légèrement acide ;
- et en ce que la seconde phase II, dans laquelle on récupère dans un mélangeur (8) la pâte (7) ainsi épaissie, puis on pratique une seconde élimination (10) de l'encre résiduelle, et un nouvel épaississage (12) est effectué en milieu alcalin par addition de réactifs alcalins dans le mélangeur (8).

2. Procédé selon la revendication 1, caractérisé en ce que la transformation des papiers imprimés en suspension pâteuse s'effectue par désintégration dans un pulpeur (1) avec un pH compris entre 4 et 8, à une température comprise entre 20 et 60° C.

3. Procédé selon la revendication 2, caractérisé en ce que dans le pulpeur, on ajoute en outre des agents tensio-actifs et/ou des agents anti-redéposition.

4. Procédé selon l'une des revendications 2 et 3, caractérisé en ce que l'acidification du milieu lors de la désintégration du papier, est effectuée par adjonction d'acide sulfurique ou de dioxyde de carbone.

5. Procédé selon l'une des revendications 2 à 4, caractérisé en ce que l'on rajoute des agents complexants des ions de métaux lourds dans le pulpeur (1) lors de la phase I de désintégration du papier.

6. Procédé selon l'une des revendications 2 à 5, caractérisé en ce que l'on rajoute des agents de blanchiment actifs en milieu acide, notamment de l'hydrosulfite de sodium.

7. Procédé selon l'une des revendications 1 à 6, caractérisé en ce que lors de la phase II, on ajoute dans le mélangeur (8) des agents de blanchiment, notamment du peroxyde d'hydrogène ($H_2O_2$), et que l'on stocke alors le mélange réactionnel ainsi constitué dans une tour de stockage (17) pendant une durée comprise entre une demi-heure et trois heures.

8. Procédé selon l'une des revendications 1 à 7, caractérisé en ce que l'on fait subir un traitement mécanique à la suspension pâteuse, après traitement dans le mélangeur (8) ou après stockage dans la tour de stockage (17) au cours de la seconde phase II.

9. Procédé selon l'une des revendications 1 à 8, caractérisé en ce que l'élimination de l'encre lors des deux phases I et II s'effectue par flottation sélective.

10. Procédé selon la revendication 9, caractérisé en ce que les mousses (4,11) résultant des flottations sélectives (3,10) effectuées lors des deux phases I et II, sont mélangées après acidification des mousses (6) de la seconde flottation sélective (10), lesdites mousses étant à nouveau flottées et les matières récupérées lors de cette nouvelle flottation étant recyclées dans la première phase I en amont de la première flottation (3).

11. Procédé selon la revendication 1 à 10, caractérisé en ce que la seconde phase II d'élimination de l'encre s'effectue par lavage, suivi ou non d'une flottation et d'un recyclage des eaux de lavage.

12. Procédé selon l'une des revendications 1 à 10, caractérisé en ce que les eaux des deux phases d'épaississage (6) et (13), à savoir au cours de la première phase I et de la seconde phase II, sont recyclées en amont des phases d'élimination respectives.

**Claims**

1. Method for deinking printed waste paper, in which :
   - said paper is converted into a pulpy suspension ;

# EP 0 466 615 B1

- the ink is then removed from this suspension in two distinct and successive phases I and II, each followed by a thickening stage ;
- lastly, the pulp deinked in this way is sent into the use circuit of the pulp,

characterised :

- in that the first phase I, during which the waste paper is disintegrated (I) into a pulpy suspension, the ink is then removed initially (3) and the partially deinked pulp is thickened (5), is carried out in a neutral or slightly acid medium;
- and in that the second phase II, in which the pulp (7) thus thickened is recovered in a mixer (8), the residual ink is then removed (10) for a second time and the pulp is thickened (12) again, is carried out in a medium which is alkaline by virtue of the addition of alkaline reagents into the mixer (8).

2. Method according to Claim 1, characterised in that the conversion of the printed paper into a pulpy suspension takes place by disintegration in a pulper (1) with a pH lying between 4 and 8, at a temperature lying between 20 and 60°C.

3. Method according to Claim 2, characterised in that surfactants and/or anti-redeposition agents are additionally added into the pulper.

4. Method according to either of Claims 2 and 3, characterised in that the medium is acidified during the disintegration of the paper by the addition of sulphuric acid or carbon dioxide.

5. Method according to one of Claims 2 to 4, characterised in that complexing agents for heavy metal ions are added into the pulper (1) during the disintegration phase I of the paper.

6. Method according to one of Claims 2 to 5, characterised in that bleaching agents which are active in an acid medium, in particular sodium hydrosulphite, are added.

7. Method according to one of Claims 1 to 6, characterised in that during phase II bleaching agents, in particular hydrogen peroxide ($H_2O_2$), are added into the mixer (8), and in that the reaction mixture thus formed is stored in a storage tower (17) for a period lying between half an hour and three hours.

8. Method according to one of Claims 1 to 7, characterised in that the pulpy suspension is subjected to a mechanical treatment after treatment in the mixer (8) or after storage in the storage tower (17) during the second phase II.

9. Method according to one of Claims 1 to 8, characterised in that the removal of the ink during phases I and II takes place by selective flotation.

10. Method according to Claim 9, characterised in that the froths (4, 11) resulting from the selective flotations (3, 10) performed during phases I and II are mixed after acidification of the froths (6) from the second selective flotation (10), the said froths being subjected to a repeated flotation and the substances recovered during this repeated flotation being recycled in the first phase I upstream of the first flotation (3).

11. Method according to one of Claims 1 to 10, characterised in that the second phase II of ink removal is effected by washing, which may or may not be followed by a flotation and a recycling of the washing water.

12. Method according to one of Claims 1 to 10, characterised in that the water from the two thickening phases (6) and (13), namely during the first phase I and the second phase II, are recycled upstream of the respective removal phases.

**Patentansprüche**

1. Verfahren zum Entfärben von alten bedruckten Papieren, bei dem:
   - man die Papiere in eine pastöse Suspension überführt;

- man dann die Farbe aus dieser Suspension in zwei bestimmten und aufeinanderfolgenden Phasen I und II entfernt, die jeweils von einem Schritt des Eindickens gefolgt sind;
- bei dem man schließlich die so entfärbte Paste in einen Kreislauf zur Wiederverwendung der Paste überführt;

dadurch gekennzeichnet:

- daß die erste Phase I, während derer man eine Auflösung (1) der alten Papiere zu einer pastösen Suspension durchführt, die dann von einer ersten Entfernung von Farbe (3) und einer Eindickung (5) der teilweise entfärbten Paste gefolgt wird, in einem neutralen oder leicht saurem Millieu durchgeführt wird;
- und daß die zweite Phase II, während derer man die so entfärbte Paste (7) in einem Mischer (8) wiedergewinnt, worauf sich dann eine zweite Entfernung (10) von verbleibender Farbe und ein neues Eindicken (12) anschließt, in einem alkalischen Millieu durchgeführt wird, indem alkalische Substanzen in den Mischer (8) zugegeben werden.

2. Verfahren nach Anspruch 1, dadurch gekennzeichnet, daß die Überführung der bedruckten Papiere in eine pastöse Suspension, die durch Auflösung in einem Auflöser (1) durchgeführt wird, bei einem pH-Wert zwischen 4 und 8 und einer Temperatur zwischen 20° und 60° C erfolgt.

3. Verfahren nach Anspruch 2, dadurch gekennzeichnet, daß in den Auflöser zusätzlich oberflächenaktive und/oder Substanzen gegen Schmutzablagerung zugegeben werden.

4. Verfahren nach Anspruch 2 und 3, dadurch gekennzeichnet, daß die Ansäuerung des Millieus während der Auflösung des Papiers durch eine Zugabe von Schwefelsäure oder Kohlendioxid erreicht wird.

5. Verfahren nach einem der Ansprüche 2 bis 4, dadurch gekennzeichnet, daß man komplexe Substanzen mit Schwermetallionen während der Phase I der Auflösung des Papieres in den Auflöser (1) zugibt.

6. Verfahren nach einem der Ansprüche 2 bis 5, dadurch gekennzeichnet, daß man in das saure Millieu aktive Bleichmittel zugibt, insbesondere Natriumhydrogensulfit.

7. Verfahren nach einem der Ansprüche 1 bis 6, dadurch gekennzeichnet, daß man während der Phase II Bleichmittel in den Mischer (8) zugibt, insbesondere Wasserstoffperoxid ($H_2O_2$), und daß man dann die so erhaltene reaktive Mischung in einem Speicherturm (17) über eine Dauer von einer halben bis zu drei Stunden speichert.

8. Verfahren nach einem der Ansprüche 1 bis 7, dadurch gekennzeichnet, daß man die pastöse Suspension einer mechanischen Behandlung unterwirft, nachdem man sie in dem Mischer (8) behandelt hat oder nachdem sie in dem Speicherturm (17) während der zweiten Phase II gespeichert wurde.

9. Verfahren nach einem der Ansprüche 1 bis 8, dadurch gekennzeichnet, daß die Entfernung der Farbe während der beiden Phasen I und II durch selektive Flotation erfolgt.

10. Verfahren nach Anspruch 9, dadurch gekennzeichnet, daß die sich bei der Durchführung der selektiven Flotation (3, 10) während der Phasen I und II ergebenen Schaumstoffe (4, 11) nach der Ansäuerung der Schaumstoffe (6) in einer zweiten selektiven Flotation (10) gemischt werden, und daß die sich bei der neuen Flotation ergebenen Schaumstoffe und die wiedergewonnenen Materialien während dieser neuen Flotation während der ersten Phase I, während der die erste Flotation (3) durchgeführt wird, rezycliert werden.

11. Verfahren nach einem der Ansprüche 1 bis 10, dadurch gekennzeichnet, daß die zweite Phase II der Entfernung der Farbe durch einen Waschvorgang bewirkt wird, der von einer Flotation gefolgt oder nicht gefolgt wird und von einer Rezyclierung der Waschwässer.

12. Verfahren nach einem der Ansprüche 1 bis 10, dadurch gekennzeichnet, daß die Abwässer der beiden Phasen des Eindickens (6) und (13), die sich während der ersten Phase I und der zweiten Phase II ergeben, während der betreffenden Phasen der Entfernung rezycliert werden.

FIG.1

FIG.2